# EUROPÄISCHE PATENTANMELDUNG

(11) **EP 2 581 523 A2**
(43) Veröffentlichungstag der Anmeldung: **17.04.2013**
(21) Anmeldenummer: 12007068.5
(22) Anmeldetag: 11.10.2012
(51) Int. Cl.: E04G 5/04

(54) **Gerüstanker mit Gerüstabstützung für Wärmedämmverbundsysteme**

(30) Priorität: 12.10.2011 DE 102011115772
(71) Anmelder: ASB Produktions GmbH, 09603 Grossschirma (DE)
(72) Erfinder: Weiß, Johannes, 09603 Großschirma (DE)
(74) Vertreter: Pöhner, Wilfried Anton

(57) **Zusammenfassung**

Gerüst an einer Außenwand eines Gebäudes mit Wärmedämmschicht bestehend aus mehreren schlanken Vertikalständern, die jeweils paarweise mit horizontalen Riegeln zu Stellrahmen starr verbunden sind, welche durch horizontale Gerüstböden miteinander verbunden werden, und mehreren, länglichen Gerüstankern, die das Gerüst mit der Außenwand verbinden, wobei der Gerüstanker an mindestens zwei, voneinander beabstandeten Punkten mit dem Gerüst verbunden ist und derjenige Teil des Querschnittes vom Gerüstanker, der von dem Drehmoment belastet wird, das horizontal und parallel zur Außenwand auf das Gerüst wirkende Kräfte verursachen, nahe zur Außenwand kleiner ist als nahe zum Gerüst.

## Beschreibung

Die Erfindung bezieht sich auf ein Gerüst an einer Außenwand eines Gebäudes mit Wärmedämmschicht bestehend aus mehreren schlanken Vertikalständern, die jeweils paarweise mit horizontalen Riegeln zu Stellrahmen starr verbunden sind, welche durch horizontale Gerüstböden miteinander verbunden werden, und mehreren, länglichen Gerüstankern, die das Gerüst mit der Außenwand verbinden.

Auf aktuellem Stand der Technik wird zur Fertigstellung der Außenwände eines Gebäudes zumeist davor ein Gerüst errichtet, von dem aus die weiteren Schichten der Außenwand aufgebracht werden. In der Regel hat dabei das Gerüst einen Abstand von rund 30 cm von der Außenwand, um Fassadenplatten und/oder Putz und/oder Farbschichten zu befestigen oder aufzutragen.

Wegen der zunehmenden Verknappung fossiler Energiereserven und einer zu geringen Verfügbarkeit von solar oder geothermisch erzeugter Energie wird es dabei immer wichtiger, auch Wärmedämmschichten an den Fassaden anzubringen. Diese Schichten können Wärmedämmverbundsysteme (WDVS) von typischer Weise 25 bis 30 cm Dicke bilden. Um nach dem Montieren dieser WDVS-Schichten noch einen ausreichenden Arbeitsraum zur Oberflächenbearbeitung der äußersten WDVS-Schicht zu haben, ist ein vergrößerter Abstand des Gerüstes von der Außenwand erforderlich, etwa in einer Größenordnung von 55 cm.

Zur Absicherung gegen das mögliche Kippen von Gerüsten ist es auf aktuellem Stand der Technik üblich, Dübel oder andere Anker in die Gebäudewand einzubringen, in die zumeist eine sog. "Ringschraube" hinein gedreht wird. Das ist eine Schraube, an deren Ende eine Öse angeformt ist. Da hinein wird eine Zug- oder Druckstange mit ihrem hakenförmig abgewinkelten Ende eingehängt.

Dabei ist es zulässig, dass das Gerüst gegen Kräfte, die horizontal und parallel zur Wand wirken, nur zu einem geringen Teil in sich selbst tragend ausgesteift sein muss, sondern sich auf die Zuganker in der Gebäudewand abstützen kann. Dabei sind z.B. in Deutschland zumeist horizontal wirkende Kräfte von bis zu 5 kN zugelassen. Eine derart hohe Kraft muss dann aber auch von jedem Zuganker aufgenommen und in die Wand abgeleitet werden können.

Bis zum Ende des 20. Jahrhunderts reichte es wegen zumeist gar nicht oder kaum von außen gedämmten Gebäuden in aller Regel aus, wenn die Ringschraube nur soweit aus der tragenden Gebäudewand herausragte, wie es für das Einhaken der Zugstange erforderlich war. Eine derart wenig herausragende Ringschraube kann ohne Probleme hohe Querkräfte aufnehmen.

Seit dem 21. Jhdt. ist es jedoch zunehmend erforderlich geworden, auf die harte, das Gebäude tragende Schale noch eine wärmedämmende Isolationsschicht aufzutragen. Es liegt in der Natur eines jeden thermisch isolierenden Materials, dass es relativ sehr zahlreiche und/oder große Luftkammern enthält und daher nur eingeschränkt oder überhaupt nicht statisch belastbar ist.

Als Isoliermaterial sind z.B. Platten aus aufgeschäumtem Polystyrol - auch unter dem Markennamen Styropor ® bekannt - weithin verbreitet. Auf diesen Platten wird ein Netz befestigt, das eine Putzschicht tragen kann.

Eine andere Ausführungsvariante ist ein zur Gebäudewand beabstandetes Fachwerk aus Holzlatten, dessen Zwischenräume mit Steinwolle gefüllt sind und das nach außen hin mit einer Putz tragenden Platte versehen ist.

In einer solchen oder ähnlichen Schicht kann kein Zuganker befestigt werden, der die zulässigen Horizontalkräfte des Gerüstes aufnehmen kann. Vielmehr ist es nach wie vor erforderlich, den Zuganker - so wie schon im vergangenen Jahrtausend üblich - in der tragenden Wand zu befestigen. Der Zuganker muss dann um die Dicke der Isolationsschicht - in der Praxis bis zu 30 cm - verlängert werden. Wenn dafür ein Stahlanker mit dem bisher üblichen Querschnitt verwendet wird, so wird er wegen dieser extremen Verlängerung schon bei Kräften abknicken, die deutlich unterhalb der noch zulässigen Obergrenze liegen, da das Isolationsmaterial der thermisch isolierenden Schicht einem abknickenden Wandanker praktisch keinen nennenswerten Widerstand entgegen setzen kann.

Die Gebrauchsmusterschrift DE 20 2010 005 020 versucht dieses Problem dadurch zu lösen, dass statt einem einzigen Wandanker nunmehr zwei Wandanker in einem gewissen Abstand zueinander eingesetzt werden. Beide Wandanker sind an ihrem, über die Isolationsschicht hinausragenden Kopf, durch einen flachen Steg miteinander verbunden. In diesen Steg sind Löcher eingebohrt, in welche die Zugstangen der Gerüste eingehakt werden können.

Leider löst auch diese Anordnung das Problem nur sehr unvollkommen, da die einzelnen, aus der Gebäudewand herausragenden Anker auch weiterhin jeweils nur ein Stück Rundstahl sind. Wenn die Knickfestigkeit eines solchen Rundstahls überschritten wird, so knickt er ab.

Weil das äußere Stück des Rundstahls von seinem Austritt aus der Wand bis zur Ringöse als Hebelarm wirkt, der das Biegemoment an der Austrittstelle linear erhöht, ist das Risiko für eine solche Knickung dramatisch angewachsen, nämlich im Verhältnis der Verlängerung durch die Dämmschicht hindurch zum Durchmesser der Ringöse.

Zwar wird bei der DE 20 2010 005 020 die Knickfestigkeit dadurch erhöht, dass nicht nur ein Anker sondern zwei Anker parallel belastet werden. Bei unverändertem Querschnitt und einer gleichen horizontalen Kraft ist die zum Abknicken erforderliche, horizontale Belastung also in erster Näherung vervierfacht.

Diesem vergleichsweise geringen Zugewinn an Festigkeit steht jedoch die massive Schwächung jeden Ankers durch seine Verlängerung wegen der Dämmschicht gegenüber.

Ein weiterer Nachteil ist der Aufwand für die Befestigungslochplatte mit den beiden eng tolerierten Tragbohrungen für die beiden Zuganker.

Auf diesem Hintergrund hat sich die Erfindung die Aufgabe gestellt, einen Gerüstanker zur Verankerung von Gerüsten an Gebäudewände zu entwickeln, die mit einer relativ dicken Isolationsschicht beaufschlagt sind, wobei der Gerüstanker die Isolationsschicht nur mit einer möglichst geringer Beschädigung durchbricht und im eingebauten Zustand insbesondere horizontal und parallel zur Gebäudewand auf das Gerüst wirkende Kräfte ableiten kann und in einer Ausführungsform möglichst weitgehend bereits im Gerüstbau verbreitete Bauelemente und Halbzeuge eingesetzt werden sollen.

Als Lösung präsentiert die Erfindung, dass der Gerüstanker an mindestens zwei, voneinander beabstandeten Punkten mit dem Gerüst verbunden ist und derjenige Teil des Querschnittes vom Gerüstanker, der von dem Drehmoment belastet wird, das horizontal und parallel zur Außenwand auf das Gerüst wirkende Kräfte verursachen, nahe zur Außenwand kleiner ist als nahe zum Gerüst.

Der Ausgangspunkt der Erfindung ist die Auswirkung von Kräften, die horizontal und parallel zur Außenwand auf das Gerüst einwirken. Diese Kräfte erzeugen in einem schlanken Gerüstanker ein Drehmoment, das den Gerüstanker bei Überschreitung seiner maximalen Biegefestigkeit abknickt. In Bezug auf seine Festigkeit ist der Gerüstanker in der erfindungsgemäßen Ausführungsform ein auf beiden Seiten fest eingespannter Stab: An seinem wandseitigen Ende ist eine Schraube oder ein Stift angeformt, welche(r) z. B. mit einem Dübel in der Außenwand befestigt ist. Ebenso ist auch das andere Ende des Gerüstankers verlängert, z. B. mit einem weiteren Stab, der an zwei voneinander beabstandeten Punkten des Gerüsts befestigt ist. Deshalb können beide Enden des Gerüstankers Drehmomente aufnehmen, die senkrecht zur Längsachse des Gerüstankers wirken, die also seine Knickfestigkeit beanspruchen.

Auf aktuellem Stand der Technik sind als Gerüstanker Stäbe üblich, die über ihre gesamte Länge hinweg den gleichen Querschnitt aufweisen. Wenn ein derartiger Stab nach dem erfindungsgemäßen Prinzip als Gerüstanker verspannt wird, wenn er also mit einer Verlängerung an der Wand befestigt ist und an seinem anderen Ende mit einer Verlängerung an zwei voneinander beabstandeten Punkten des Gerüsts befestigt ist, so würden parallel zur Wand wirkende Kräfte eine Bewegung des Gerüstes parallel zur Wand auslösen, wenn sich nicht die Gerüstanker dagegen stemmen würden. Die Gerüstanker werden durch die Kräfte auf das Gerüst mit einem Biegemoment belastet, das in unmittelbarer Nähe seiner Einspannungen am größten ist, weil an dieser Stelle die maximale, frei verlaufende Länge des Gerüstankers als Hebelarm wirkt und dort das Produkt aus Kraft auf das Gerüst und dem Hebelarm am größten ist, also das größte Knickmoment für den Gerüstanker erzeugt. Deshalb werden in der Praxis derartig eingespannte Gerüstanker bei Überlastung zuerst in der Nähe ihrer Einspannung, also entweder nahe zur Wand oder nahe zum Gerüst brechen.

In der Praxis werden die Kräfte, die das Gerüst belasten - z. B. durch Sturm oder durch ungleichmäßige Belastung - natürlich nicht immer genau horizontal und genau parallel zur Wand ausgerichtet sein. Bei der genauen Zerlegung dieser Kraftvektoren ergibt sich jedoch, dass nur die horizontale und parallel zur Wand verlaufende Komponente ein Biegemoment auf den Gerüstanker erzeugt. Die übrigen Komponenten werden entweder innerhalb des Gerüsts oder durch eine Zug- oder Druckbelastung des Gerüstankers aufgefangen, aber erzeugen kein Biegemoment.

Um aufgabengemäß dem Gerüstanker eine ausreichende Widerstandsfähigkeit gegen derartige Biegemomente zu verleihen, scheidet der naheliegende Ansatz einer Vergrößerung des Querschnitts deshalb aus, weil dafür in die Isolationsschicht ein entsprechend größeres Loch gebrochen werden muss, was die Aufgabenstellung ebenfalls ausschließt.

An dieser Stelle ist zu bemerken, dass es wegen der Beschränkung auf ausschließlich horizontale Kräfte auch Vergrößerungen des Querschnitts gibt, die sich fast gar nicht auf die gewünschte Knickfestigkeit auswirken.

Das sei am Beispiel eines streifenförmigen Gerüstankers erläutert. Wenn ein derartiger Gerüstanker "hochkant", also vertikal ausgerichtet wird, kann er den hier besprochenen Biegemomenten fast gar keinen Widerstand entgegensetzen. Wenn er jedoch um 90 ° verdreht eingebaut wird, die größte Fläche des Streifens also horizontal ausgerichtet ist, kann ein und derselbe Streifen nennenswerte Drehmomente aufnehmen. Daraus folgt, dass innerhalb eines Profils des Gerüstankers z. B. vertikal ausgerichtete, relativ dünne Rippen nahezu keine Wirkung beim Aufnehmen der Biegemomente haben.

Mit den bis hierher geschilderten Bedingungen lässt sich der erfinderische Gedanke nunmehr in einleuchtender Weise erklären: Da die Wärmedämmschicht weder zur Befestigung noch zur seitlichen Abstützung des Gerüstankers taugt, muss der Gerüstanker nach wie vor in der Außenwand unterhalb der Wärmedämmschicht befestigt werden und dann durch die Wärmedämmschicht hindurch und über den notwendigen Abstand zwischen Wärmedämmschicht und Gerüst hinweg zum Gerüst führen. Das erfordert eine deutliche Verlängerung des Gerüstankers. Wegen dieser Verlängerung erzeugen die horizontal und parallel zur Gebäudeaußenwand auf das Gerüst wirkenden Kräfte im Gerüstanker ein deutlich höheres Biegemoment, was das Risiko des Abknickens im Verhältnis zur Verlängerung erhöht.

Deshalb läge es nahe, den Querschnitt des Profils vom Gerüstanker entsprechend zu vergrößern. Diese simple Lösung ist jedoch deshalb nicht zulässig, weil dadurch in der Wärmedämmung unnötig große Durchlässe für den Gerüstanker geschaffen werden müssen, was nach dem Herausnehmen des Gerüstankers ein thermisch sehr nachteiliges oder aufwendig zu verfüllendes Loch in der Wärmedämmung hinterlässt. Deshalb sollte die Öffnung in der Wärmedämmung einen möglichst geringen Querschnitt aufweisen, was jedoch einer ausreichenden Knickfestigkeit des Gerüstankers entgegensteht.

Um dieses Problem zu lösen, weist die erfindungsgemäße Ausführung eines Gerüstankers zwei wesentliche Merkmale auf: Das erste Merkmal ist die gerüstseitige Befestigung des Gerüstankers an zwei voneinander beabstandeten Punkten. Dadurch kann auch an dieser Stelle ein Drehmoment übertragen werden. Der Gerüstanker stützt sich also auf das Gerüst ab. Das zweite, ebenso wichtige Merkmal ist, dass der Querschnitt des Gerüstankers über seine Länge hinweg von der Außenwand her mit zunehmender Nähe zum Gerüst hin anwächst. Im Gegensatz dazu war beim bisherigen Stand der Technik ein über die Länge hinweg gleicher Querschnitt üblich.

Dadurch wird erreicht, dass der Querschnitt des Gerüstankers und damit auch die dafür erforderliche Öffnung innerhalb der Wärmedämmschicht relativ sehr schlank sind. Weil in dem Bereich außerhalb der Wärmedämmschicht bis hin zum Gerüst, also in einem Raum, in dem das Bauvolumen des Gerüstankers unkritisch ist, der Querschnitt kontinuierlich anwächst, wächst vorteilhafter Weise mit zunehmender Nähe zum Gerüst auch die Knicksicherheit des Gerüstankers. Dadurch werden die Bereiche des Gerüstankers in der Nähe des Gerüsts so biegesteif, dass sie sich unter dem Einfluss der Biegemomente kaum mehr verformen und das Risiko eines Abknickens vom Gerüstanker in diesem Bereich stark reduziert ist.

Eine weitere, ebenso vorteilhafte Wirkung ist, dass sich dadurch auch für das wandnahe Ende des Gerüstankers das dort wirksame Biegemoment reduziert, weil wegen der zunehmenden Steifigkeit des gerüstnahen Endes der für die Ausbildung des jeweiligen Biegemomentes wirksame Hebelarm verkleinert wird.

Durch die Änderung des Querschnitts über die Länge hinweg wird also im Vergleich zu einem Gerüstanker mit gleichmäßigem Querschnitt das in einem Punkt wirksame Biegemoment mehr auf den außerhalb der Wärmedämmschicht verlaufenden Bereich des Gerüstankers verschoben. Dadurch wird auch für den Teil des Gerüstankers innerhalb der Wärmedämmschicht mit seinem relativ schlanken Querschnitt dennoch eine ausreichende Knicksicherheit erreicht.

In einer Ausführungsform eines erfindungsgemäßen Gerüstankers steigt also dessen Querschnitt über seine Länge hinweg von der Außenwand bis hin zum Gerüst stufenlos an. Dafür kann ein erfindungsgemäßer Gerüstanker in dem Bereich zwischen Außenwand und Gerüst z.B. die Form einer trapezförmigen horizontal ausgerichteten Platte oder die Form eines Kegelstumpfes annehmen. Geeignet ist auch ein Hohlprofil, dessen Wandstärke zum Gerüst hin zunimmt. Dabei kann das Hohlprofil sogar nach außen hin ein über seine Länge hinweg gleiches Profil zeigen.

Derartig geformte Gerüstanker müssen natürlich auf ihrer zur Außenwand hin weisenden Seite mit einer Wandbefestigung versehen werden, wie z. B. einer angeformten Schraube. Auf der zum Gerüst weisenden Seite ist eine Befestigung an zwei voneinander beabstandeten Punkten erforderlich, wie z. B. eine Verlängerung durch eine Stange.

Als Alternative zu einer stufenlosen Vergrößerung eines Querschnitts ist es interessant, den Querschnitt des Gerüstankers über seine Länge hinweg in Stufen zu vergrößern. Dabei ist es insbesondere vorteilhaft, den Querschnitt innerhalb der Wärmedämmschicht nach außen hin konstant zu halten. Der Vorteil dieser Konfiguration ist, dass dadurch die Beschädigung der Wärmedämmschicht so gering wie nur irgend möglich ist und dass ein Wiederauffüllen der entstandenen Öffnung durch entsprechend geformte Profilabschnitte sehr vereinfacht ist.

In einer sehr interessanten Ausführungsvariante schlägt die Erfindung vor, dass der Gerüstanker aus einem Ankerstift besteht, der mit seinem ersten Teil in die Außenwand einzubringen ist. Der zweite Teil des Ankerstifts ist zumindest größtenteils von einem länglichen Hohlprofil umgeben. Dieses Hohlprofil ist über wenigstens ein Koppelprofil, das im Querschnitt größer als das Hohlprofil ist, mit dem Gerüst verbunden.

Ein Merkmal dieser Ausführungsvariante ist also, dass die erfindungsgemäße Vergrößerung des Querschnitts stufenförmig verwirklicht wird. Innerhalb jeder Stufe ist der Querschnitt jedoch wieder über die Länge hinweg konstant, sodass kostengünstige, bekannte Standardprofile verwendet werden können. Die aufwendige Herstellung von Sonderteilen wird dadurch vermieden.

Es ist also eine Idee dieser Ausführungsvariante, den aktiven Teil des Gerüstankers, welcher ohne Unterstützung durch die umgebende Außenwand die Biegemomente aus der horizontal auf das Ende des Gerüstankers wirkenden Kraft aufnehmen muss, dadurch zu verstärken, dass er von einem zusätzlichen Hohlprofil umgeben wird. Dieses Hohlprofil erhöht die Biegesteifigkeit mit einem erheblich geringeren Einsatz an Material als eine simple Verstärkung des Querschnittes.

Eine weitere Teilidee dieser Variante ist es, den Gerüstanker im Zwischenraum zwischen der thermischen Isolierschicht und dem Gerüst, also in einem Bereich, in dem der Gerüstanker die thermische Isolierschicht nicht mehr beschädigt, durch ein weiteres Profil - das sogenannte Koppelprofil - weiter zu verstärken.

Bei dieser Ausführungsform ist es zu bevorzugen, dass sich nur das Hohlprofil innerhalb der Wärmedämmschicht befindet. Das - in seinem Querschnitt größere - Koppelprofil sollte außerhalb der Wärmedämmschicht angeordnet werden, damit sein größerer Querschnitt nicht eine entsprechend vergrößerte Öffnung in der Wärmedämmschicht verursacht. In dieser Ausführung überbrückt das Koppelprofil den Abstand zwischen der Wärmedämmschicht und der zur Wand weisenden Kante des Gerüstes.

Alternativ ist es auch möglich, dass das Koppelprofil noch teilweise in die thermische Isolierschicht hineinragt. Aber auch in dieser Konfiguration bleibt noch der Vorteil, dass der Abschnitt des Gerüstankers mit dem Hohlprofil einen kleineren Durchmesser als das Koppelprofil hat und deshalb die Isolierschicht weniger aufweitet.

Wie im Hauptanspruch festgelegt, ist eine ganz wesentliche Teilidee der Erfindung, die Biegemomente, die durch horizontal wirkende Kräfte auf den Gerüstanker ausgeübt werden, dadurch auf das Gerüst abzuleiten, dass der Gerüstanker an mindestens zwei voneinander beabstandeten Punkten mit dem Gerüst verbunden wird. Dadurch kann z.B. ein fest im Gerüst verankerter Gerüstboden mit an der Weiterleitung der vom Biegemoment auf das Gerüst ausgeübten Kräfte beteiligt werden.

Bei allen Varianten eines erfindungsgemäßen Gerüstankers ist es als Verdienst der Erfindung hervorzuheben, dass der Gerüstanker innerhalb der thermischen Isolierschicht möglichst schlank gehalten wird, aber in dem Luftbereich zwischen Isolierschicht und Innenkante des Gerüstes verstärkt und biegesteif an das Gerüst angebunden wird.

Die zuletzt geschilderte Variante eines Gerüstankers aus mehreren Profilabschnitten mit jeweils immer größerem Querschnitt, die aber über die Länge des Abschnittes hinweg ein konstant gleiches Profil aufweisen, hat den entscheidenden Vorteil, dass der Gerüstanker fast nur aus bereits oft verwendeten Standardprofile wie z.B. einfachen Rohrabschnitten aufgebaut werden kann, sodass der zusätzliche Aufwand für die erfindungsgemäße Verstärkung eines Gerüstankers, sehr klein gehalten werden kann. Wenn Sonderbauteile überhaupt benötigt werden, dann nur für die Verbindung der Profile untereinander.

Ein weiterer Vorteil von Standardprofilen ist es, dass sie mit dem Gerüst über standardmäßig dafür vorgesehene Verbindungselemente verbunden werden können. Wenn z.B. als "Koppelprofil" oder als "Verlängerungsprofil" zur Verlängerung des Koppelprofils ein Stahlrohr eingesetzt wird, so kann dieses an die - allermeist ebenfalls runden - Vertikalständer des Gerüstes mit einem weit verbreiteten, sog. "Gerüstverbinder" angebunden werden.

Ein derartiger Gerüstverbinder besteht z.B. aus insgesamt vier Halbschalen, von denen jeweils ein Paar ein Rohr umfasst. Dabei sind die beiden Paare zur Aufnahme eines Rohres jeweils an einem Ende gelenkig miteinander verbunden und an dem anderen Ende miteinander zu verschrauben. Von diesen beiden Paaren ist jeweils ein Stück fest oder gegeneinander verschwenkbar miteinander verbunden, zumeist durch Nieten oder Schrauben. Eine einfachere Ausführungsform besteht aus nur zwei Halbschalen, die ein Rohr umschließen. Eine dieser beiden Halbschalten ist mit einer Schraube oder mit einem Niet in einer Bohrung eines Gerüstbauelementes wie z.B. eines Vertikalständers befestigt.

In einer bevorzugten Ausführungsform eines erfindungsgemäßen Gerüstankers weist der zweite Teil des Ankerstiftes einen runden Querschnitt auf. Dann ist es sehr sinnvoll, dass auch das ihn umgebende Hohlprofil sowie das anschließende Koppelprofil aus Rohrabschnitten mit ebenfalls kreisförmigem Querschnitt bestehen, die konzentrisch zum zweiten Teil des Ankerstiftes angeordnet sind.

Das Prinzip der Erfindung ist jedoch keinesfalls darauf eingeschränkt, dass das Hohlprofil und das Koppelprofil Rohrabschnitte mit kreisförmigem Querschnitt sind. Vielmehr können das Hohlprofil und/oder das Koppelprofil z.B. aus Vierkantrohr bestehen oder einen anderen polygonalen Querschnitt aufweisen.

Im Sinne einer hohen Biegesteifigkeit wären auch Profile vorteilhaft, die aus Wellblech bestehen, das zu einem Hohlkörper mit geschlossener Mantelfläche verarbeitet ist. Ebenfalls verwendbar sind U-Profile, die in zahlreichen Varianten als Halbzeug bekannt und erhältlich sind.

Eine weitere Alternative sind Strangpressprofile. Vorteilhaft sind z.B. runde oder quadratische, rohrartige Profile, an deren Außenseite radial ausgerichtete Stege als Verstärkung angeformt sind.

Das erfinderische Prinzip lässt eine unbegrenzte Vielfalt an Profilen zu, solange sie dem erfinderischen Gedanken untergeordnet sind, dass das Hohlprofil, welches den Ankerstift umgibt, in seinem Kernbereich von kleinerem Querschnitt als das daran anschließende Koppelprofil ist. Dann ist nämlich die - unvermeidliche - Beschädigung der Isolierschicht durch den Gerüstanker im Verhältnis zur erreichten Biegekraft gegen parallel zur Isolierschicht einwirkende Kräfte so gering wie nur möglich.

Zugleich wird die erforderliche Biegesteifigkeit maßgeblich dadurch unterstützt, dass der Teil des Gerüstankers außerhalb der Isolierschicht - nämlich das Koppelprofil - in seinem statisch effektiven Querschnitt gegenüber dem innerhalb der Isolierschicht befindlichen Teil des Gerüstankers - nämlich dem Hohlprofil - deutlich verstärkt ist. Dabei geht die nach außen hin sichtbare Verstärkung deutlich über das Maß hinaus, das noch als Beschädigung der Isolierschicht tolerierbar wäre.

Zur Verbindung des erfindungsgemäßen Gerüstankers mittels des darin enthaltenen Ankerstiftes mit der Außenwand sind alle bekannten sowie sich zukünftig noch ergebenden Methoden nutzbar. So ist z.B. das Prinzip milliardenfach bewährt, den ersten Teil des Ankerstiftes mit einem Gewinde zu versehen.

Wenn sich der tragende Querschnitt dieses Gewindes von der Spitze des Ankerstiftes aus linear oder ballig bis auf den Querschnitt des Ankerstiftes erhöht, so können die Gewindegänge eines derartigen Ankerstiftes "selbstschneidend" ausgelegt werden, so dass sie z.B. in Holzbalken oder in Lehmwände oder in ähnliche Baustoffe ohne ein weiteres, zusätzliches Bauteil hineingedreht werden können. Lediglich bei einigen, wenigen Werkstoffen ist eine Vorbohrung mit einem geringen Durchmesser erforderlich. Das Gewinde weitet diese Bohrung dann beim Eindrehen zu einem Gewinde auf, das komplementär zum Gewinde auf dem Ankerstift geformt ist.

In der Praxis wird das Gewinde wohl die am häufigsten verwendete Methode zur Verbindung des Ankerstiftes mit der Außenwand sein. Denkbar ist es jedoch auch, dass die Spitze des Ankerstiftes aus einer spitz zulaufenden, glatten Fläche besteht. Ein derartiger Ankerstift kann alternativ in der Nähe der Spitze einen geringfügig größeren Querschnitt aufweisen als im übrigen Bereich, sodass sich der vergrößerte Bereich in der Außenwand verkeilt.

Alternativ dazu wird der erste Teil des Ankerstiftes an seiner Spitze in zwei Schenkel aufgespalten, die sich Y-förmig voneinander abspreizen und mit Mörtel oder einem anderen, sich verhärtenden Werkstoff in einem Bohrloch in der Außenwand gesichert werden.

Eine andere Ausführungsmöglichkeit ist die Ausbildung des Ankerstiftes als sog. "Spreizdübel". Dazu ist die Spitze des ersten Teiles vom Ankerstift als eine Hülse geformt, die durch zwei Schlitze in zwei Hälften geteilt ist. Der innere Querschnitt dieser Hülse reduziert sich von der Spitze her kontinuierlich und bildet so einen Hohlkegel. In diesen Hohlkegel wird ein dazu komplementärer Kegel mit einem Gewinde hineingedrückt und spreizt dadurch die beiden Schenkel der Hülse soweit auseinander, bis sie sich an der Innenwand des Bohrloches in der Außenwand verkeilen. Ein derartiger Spreizdübel setzt voraus, dass sich die Hülse nicht gegenüber der Außenwand verdreht, wozu sie z.B. mit schmalen Längsrippen auf ihrer Außenfläche ausgestattet werden kann.

In einer interessanten Alternative ist der Ankerstift als eine sog. "Ringschraube" ausgebildet. Eine derartige Ringschraube ist ein im Gerüstbau weithin verbreitetes Befestigungselement für die Gerüstanker in der angrenzenden Außenwand. Da die Ringschrauben in sehr großen Stückzahlen produziert und bereitgehalten werden, sind sie zu sehr geringen Kosten verfügbar.

Die Verwendung solcher Ringschrauben hat auch den Vorteil, dass an Stellen der Außenwand, die nicht mit einer Wärmedämmschicht versehen werden müssen, ohne zusätzliche Vorbereitung ein konventioneller Gerüstanker angebracht werden kann.

Alternativ zu einer Öse kann an den Ankerstift auch ein abgewinkelter Schenkel angeformt werden, der ebenso wie die Öse zum Hineindrehen eines Gewindes genutzt werden kann. Er wird im Folgenden als "Winkelschraube" bezeichnet.

Um eine derartige Ringschraube oder Winkelschraube in einem erfindungsgemäßen Gerüstanker zu nutzen, schlägt die Erfindung vor, dass im Hohlprofil oder im Koppelprofil eine Ausnehmung vorhanden ist, die komplementär zu der Öse oder dem abgewinkelten Schenkel geformt ist und nach dem Einstecken des Ankerstiftes Raum für die Öse oder den Schenkel bietet.

In einer weiter verfeinerten Variante kann diese Ausnehmung beim Einschrauben des Ankerstiftes in die Außenwand zur Übertragung des dazu erforderlichen Drehmomentes genutzt werden.

In einer interessanten Ausführungsform schlägt die Erfindung für diesen Zweck vor, dass der Innenradius des Koppelprofils etwas größer als der Außenradius der Öse oder etwas größer als die größte Länge des abgewinkelten Schenkels in radialer Richtung ist. Des Weiteren sind im Inneren des Koppelprofils an dessen wandseitigem Ende zwei gleiche Zylindersegmente befestigt. Deren Zylindermantel liegt jeweils auf der Innenfläche des Koppelprofils auf und deren jeweilige Schnittebene verläuft nahe an und parallel zu der Öse oder dem abgewinkelten Schenkel.

Mit anderen Worten kann diese Form der beiden Zylindersegmente so beschrieben werden, dass aus einem massiven Zylinder entlang dessen Längsachse ein Schlitz zur Aufnahme der Öse oder des abgewinkelten Schenkels herausgesägt wird, der geringfügig breiter als deren "Dicke" ist.

Dank dieser Formgebung kann von dem Koppelprofil eine Kraft auf die Seitenfläche der Öse oder des abgewinkelten Schenkels ausgeübt werden, sodass sich ein Drehmoment übertragen lässt, mit dem der Ankerstift in die Außenwand eingeschraubt werden kann.

Wenn das Koppelprofil mit dem Hohlprofil starr verbunden ist, erfüllen diese Zylindersegmente sogar dann ihre Funktion, wenn sie nur lose in den Innenraum des Koppelprofils eingelegt werden. Die Erfindung bevorzugt jedoch, dass die Zylindersegmente starr mit dem Koppelprofil verbunden sind.

Insbesondere dann, wenn das Koppelprofil einen deutlich größeren Innendurchmesser als den Außendurchmesser des Hohlprofils aufweist ist es vorteilhaft, das starr mit dem Koppelprofil verbundene - z.B. verschweißte - Zylindersegment auch mit dem Hohlprofil starr zu verbinden, z.B. durch eine weitere Verschweißung. Dann dient das Zylindersegment nicht zur Drehmomentübertragung sondern auch zur Verbindung von Hohlprofil und Koppelprofil.

Es ist dann auch möglich, von der wandfernen Seite des Gerüstankers her einen Ankerstift in Form einer "Ringschraube" oder "Winkelschraube" in das Koppelprofil und weiter in das Hohlprofil hineinzuschieben, bis der erste Teil des Ankerstiftes mit seiner Spitze wieder aus dem Hohlprofil heraus ragt und die Öse oder der Winkel in dem dazu komplementären Innenraum im Koppelprofil angelangt ist.

Um die Öse einer Ringschraube oder den abgewinkelten Schenkel einer Winkelschraube im Hohlraum des Koppelprofil zu halten, schlägt die Erfindung vor, dass das Koppelprofil in unmittelbarer Nachbarschaft der Öse oder des abgewinkelten Schenkels in radialer Richtung von zwei miteinander fluchtenden Bohrungen durchbrochen ist, durch welche ein Sicherungsstift lösbar hindurch gesteckt ist.

Wenn dann zum Hineinschrauben in die Außenwand auf den Ankerstift ein Druck in Längsrichtung ausgeübt werden muss, presst sich die Öse oder der Schenkel an den Sicherungsstift, der die Kraft in das Koppelprofil weiterleitet.

Wenn aber der Ankerstift anderwärts verwendet werden soll, so kann er durch Lösen und Entfernen des Sicherungsstiftes aus dem Gerüstanker herausgenommen werden.

In einer weiteren, optionalen Ausführungsform kann in das wandferne Ende des Koppelprofils ein Verlängerungsprofil hineingeschoben oder über das wandferne Ende herübergeschoben werden. Um dieses Verlängerungsprofil am Koppelprofil zu befestigen schlägt die Erfindung einen radial ausgerichteten Stift oder je ein Gewinde in beiden Rohrenden oder eine Rastkupplung oder eine Madenschraube oder alle anderen, zur drehsteifen Verbindung zweier Rohre bekannten Befestigungsmittel vor.

Für einen solchen, voll ausgestatteten Gerüstanker ist das folgende Verfahren zum Montieren sinnvoll: Im ersten Schritt wird der Ankerstift mit seiner Spitze in den Innenraum des Koppelprofils und von da weiter in das Hohlprofil hineingeschoben, bis seine Öse oder sein abgewinkelter Schenkel an den Anschlag im Koppelprofil anstößt. Im zweiten Schritt wird ein Sicherungsstift durch die beiden miteinander fluchtenden Bohrungen im Koppelprofil eingesteckt und befestigt. Dadurch wird der Ankerstift gegen ein Herausdrücken aus Hohlprofil und Koppelprofil abgesichert.

Dann wird im dritten Schritt in einer ersten Alternative die soweit vorbereitete Einheit in der Außenwand befestigt und erst dann die Verbindung zum Gerüst hergestellt.

Eine zweite Alternative ist, das Verlängerungsprofil an das Koppelprofil zu montieren und erst dann den nunmehr vollständigen Gerüstanker in der Außenwand zu befestigen und ihn erst abschließend mit dem Gerüst zu verbind.

Dabei ist es sinnvoll, bei der Befestigung des nur teilweise fertig gestellten Gerüstankers in der Außenwand zum Hineindrehen ein Werkzeug zu verwenden, das auf die Befestigung der Verlängerungshülse an der Koppelhülse abgestimmt ist. Wenn z.B. dafür ein Gewinde vorhanden ist, so ist es sinnvoll, in dieses Gewinde einen Hebel hineinzuschrauben, der dann als Werkzeug dient.

Wenn als Befestigung des Verlängerungsprofils zwei radial ausgerichtete und miteinander fluchtende Bohrungen vorgesehen sind, so ist es vorteilhaft, durch diese Bohrungen einen Hebel zu stecken, der dann als Werkzeug dient.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1: Schnitt durch Außenwand mit Wärmedämmung und Gerüst mit Gerüstanker in Fluchtpunktperspektive
- Figur 2: Seitenansicht eines Gerüstes mit Gerüstanker
- Figur 3: Perspektivische Ansicht von Teilen eines Gerüstankers

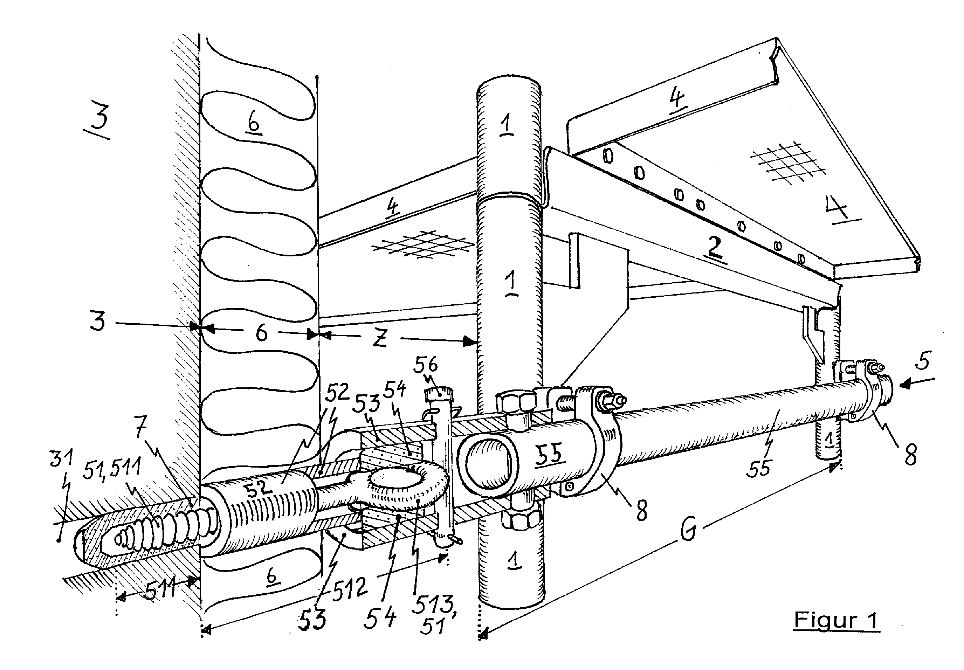

In Figur 1 ist als Darstellungsart eine Fluchtpunktperspektive mit sehr nahe liegenden Fluchtpunkten gewählt, um den sehr schmalen und langen Gerüstanker 5 zeichnerisch deutlich zu verkürzen und um das Innere des Koppelprofils 53 in ausreichender Größe zeichnen zu können.

In Figur 1 ist eine Außenwand 3 mit einer Wärmedämmschicht 6 im Schnitt gezeigt, vor der ein Gerüst von der Breite G aufgestellt und mittels eines Gerüstankers 5 mit der Außenwand 3 verbunden ist.

In Figur 1 ist die Außenwand 3 zeichnerisch an der Stelle eines Bohrloches 31 geschnitten, in welches ein Dübel 7 eingesteckt ist, in dem ein erfindungsgemäßer Gerüstanker 5 befestigt ist.

In Figur 1 sind in die Außenwand 3 und die Wärmedämmschicht 6 sowie in das Gerüst jeweils verschiedene Schnittebenen gelegt worden, die allesamt senkrecht zur Außenwand ausgerichtet sind.

Eine erste Schnittebene verläuft auch senkrecht zur Erdoberfläche. Dadurch wird ganz links in Figur 1 die Außenwand 3 und das darin eingebrachte Bohrloch 31 sichtbar. In das Bohrloch 31 ist ein Dübel 7 eingesteckt, in den das Gewinde des ersten Teils 511 des Ankerstiftes 51 eingedreht ist.

Der zweite Teil 512 des Ankerstiftes 51 ist in seinem Verlauf innerhalb der Wärmedämmschicht 6 von dem Hohlprofil 52 umgeben. In Figur 1 ist klar zu erkennen, dass das Hohlprofil 52 ein Rohrabschnitt ist, der - in diesem Ausführungsbeispiel - mit einem gewissen Abstand den Ankerstift 51 umgibt. Das Hohlprofil 52 verläuft durch die Wärmedämmschicht 6 hindurch und - in diesem Ausführungsbeispiel - sogar etwas darüber hinaus.

Gut zu erkennen ist, dass das Hohlprofil 52 im Bereich der Wärmedämmschicht 6 den sehr schlanken Ankerstift 51 in seiner Biegefestigkeit verstärkt. Dazu ist eine Verbindung zwischen dem Hohlprofil 52 und dem Ankerstift 51 erforderlich, die Kräfte übertragen kann. Um diese Verbindung zu zeigen, ist in Figur 1 der rechte, wandferne Teil des Hohlprofils 52 zeichnerisch aufgeschnitten, sodass der darin verlaufende Schaft des Ankerstiftes 51 sichtbar wird. Er geht in diesem Ausführungsbeispiel in die daran angeformte Öse 513 über.

In Figur 1 ist sehr gut zu erkennen, dass der Durchmesser der Öse 513 deutlich größer ist, als der Durchmesser des Hohlprofils 52. Deshalb liegt die Öse 513 auf der wandfernen Kante des Hohlprofils 52 auf, was in Figur 1 jedoch nur für den vom Betrachter entfernten Auflagepunkt der Öse 513 sichtbar ist. Der vordere, dem Betrachter nähere Auflagepunkt, ist nicht sichtbar, da in diesem Bereich das Hohlprofil 52 zeichnerisch weggeschnitten ist.

Ebenfalls zeichnerisch aufgeschnitten ist in Figur 1 ein weiteres, wesentliches Merkmal der Erfindung, nämlich das Koppelprofil 53. Es hat im Ausführungsbeispiel der Figur 1 einen deutlich größeren Durchmesser als das Hohlprofil 52. Dieser Abstand wird durch die beiden Zylindersegmente 54 überbrückt, die das Hohlprofil 52 mit dem Koppelprofil 53 verbinden.

In Figur 1 ist von den beiden Zylindersegmenten 54 vor allem ihre Schnittfläche zu sehen, die schraffiert und gepunktet ist. Nur in einem sehr kleinen Bereich ist zu erkennen, dass sich die beiden Zylindersegmente 54 nach außen hin jeweils an die Innenfläche des Koppelprofils 53 formschlüssig anschmiegen.

In Figur 1 ist nicht sofort wahrnehmbar, dass die Zylindersegmente 54 nach innen hin jeweils eine Ebene bilden, auf der die Ringöse 513 des Ankerstiftes 51 aufliegt. Bei dem in Figur 1 dargestellten Drehwinkel des Gerüstankers 5 verlaufen diese beiden Ebenen waagerecht. Die Schnittkanten dieser Ebene darf man sich In Figur 1 wegen der Darstellung in Fluchtpunktperspektive jedoch nicht als Parallelen zu den darüber gezeigten Gerüstböden 4 vorstellen.

Im weiteren Verlauf des Gerüstankers 5 ist der Sicherungsstift 56 zu erkennen. Er verläuft durch die beiden Bohrungen 531 und 532 hindurch und hält die Öse 513 auf ihrem Platz zwischen den beiden Ebenen der Zylindersegmente 54, derweil der Gerüstanker 5 in den Dübel 7 in der Außenwand 3 eingeschraubt wird. Der Sicherungsstift 56 ist oben und unten mit zwei Bohrungen versehen, durch die Sicherungselemente für das sichere Verbleiben des Sicherungsstiftes an seinem Platz eingesteckt sind.

In Figur 1 ist im weiteren Verlauf des Koppelprofils 53 zu sehen, wie daran ein Verlängerungsprofil 55 angeschlossen ist. Dieses Profil hat im gezeigten Ausführungsbeispiel einen größeren Durchmesser als das Hohlprofil 52, ist aber noch so klein, dass es in das Koppelprofil 53 eingesteckt werden kann. In dem Ausführungsbeispiel der Figur 1 ist es mit dem Koppelprofil 53 über einen Bolzen verbunden, der radial zu den beiden Profilen ausgerichtet ist.

In Figur 1 ist gut zu sehen, wie das Verlängerungsprofil 55 mittels zweier Gerüstverbinder, auch Gerüstkupplung oder Gerüstschelle genannt, mit den Vertikalständern 1 verbunden ist. In der gezeichneten Ausführungsvariante bestehen die Gerüstverbinder aus zwei Halbschalen, die sich um das Verlängerungsprofil 55 herumlegen. Die in Figur 1 hintere Halbschale ist über einen - nicht sichtbaren - Bolzen jeweils mit einem Vertikalständer 1 verbunden.

Insgesamt wird in Figur 1 die wichtigste Teilidee der Erfindung sehr schön deutlich, dass nämlich der erfindungsgemäße Gerüstanker 5 mit Hilfe standardmäßig verfügbarer Halbzeuge eine übliche Ringschraube so versteifen und verlängern kann, dass ihre Knickfestigkeit erheblich erhöht wird.

Dabei ist es ein wesentlicher Vorteil des erfindungsgemäßen Gerüstankers 5, dass er innerhalb der Wärmedämmschicht 6 relativ sehr schlank, aber dennoch relativ sehr biegesteif ist, aber außerhalb der Wärmedämmschicht 6 so stark verbreitert ist, dass dieser Teil eine deutlich höhere Biegesteifigkeit hat als der Ankerstift 51 und das ihn umgebende Hohlprofil 52 jeweils für sich alleine. Die Biegesteifigkeit des erfindungsgemäßen Gerüstankers steigt also außerhalb der Wärmedämmschicht stark an.

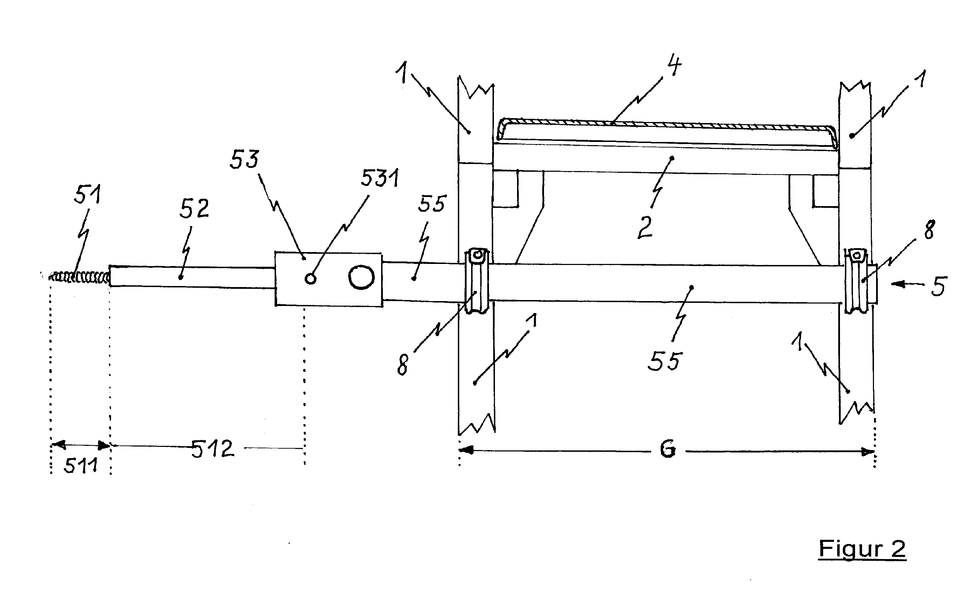

In Figur 2 ist der in Figur 1 in Fluchtpunktperspektive dargestellte, erfindungsgemäße Gerüstanker 5 und dessen Verbindung mit einem Gerüst in Seitenansicht gezeichnet. Rechts ist das Gerüst der Breite G zu erkennen, das aus den Vertikalständern 1 besteht, die jeweils paarweise mit einem Riegel 2 verbunden sind. Auf dem Riegel 2 liegt ein Gerüstboden 4 auf, von dem in Figur 2 nur der Querschnitt zu sehen ist. An dieses Gerüst ist über zwei Gerüstverbinder 8 ein erfindungsgemäßer Gerüstanker 5 anmontiert.

In Figur 2 gut zu sehen ist eines der wesentlichen erfinderischen Merkmale des Gerüstankers 5, nämlich dass er von rechts nach links in seinem Querschnitt abnimmt - mit der Ausnahme des Koppelprofils 53 in der hier gezeigten Ausführungsvariante. Dadurch ist der Gerüstanker 5 insgesamt sehr biegesteif, aber in seinem linken Teil trotzdem relativ schlank.

Figur 2 zeigt, dass den geringsten Durchmesser der Ankerstift 51 hat und zwar der erste Teil 511, der hier als Gewinde ausgebildet ist. Daran schließt sich das Hohlprofil 52 an. Es hat bereits einen größeren Durchmesser als der sichtbare, erste Teil 511 des Ankerstiftes 51. An das Hohlprofil 52 schließt sich das Koppelprofil 53 an, das in der Ausführungsform der Figur 2 deshalb einen besonders großen Querschnitt hat, da es das anschließende Verlängerungsprofil 55 außen überlappt. In dem Koppelprofil 53 ist die erste radiale Bohrung 531 zu sehen. In diese Bohrung 531 wird ein - in Figur 2 nicht gezeigter - Sicherungsstift 56 hineingesteckt. Er verhindert, dass die - in Figur 2 ebenfalls nicht gezeigte - Öse 513 aus dem Koppelprofil 53 heraus gleiten kann.

An das Koppelprofil 53 ist ein Verlängerungsprofil 55 angeschlossen. Dazu dient die in Figur 2 nicht mit einem Bezugszeichen versehene zweite Bohrung. Durch diese Bohrung wird - wie in Figur 1 sichtbar - z.B. ein Bolzen zur Verbindung durchgesteckt.

Insgesamt macht Figur 2 sehr schön deutlich, mit welch langem Hebelarm der erfindungsgemäße Gerüstanker 5 an zwei deutlich voneinander entfernten Punkten am Gerüst angeschraubt ist - hier durch die beiden Gerüstverbinder 8 an je einem Vertikalständer 1.

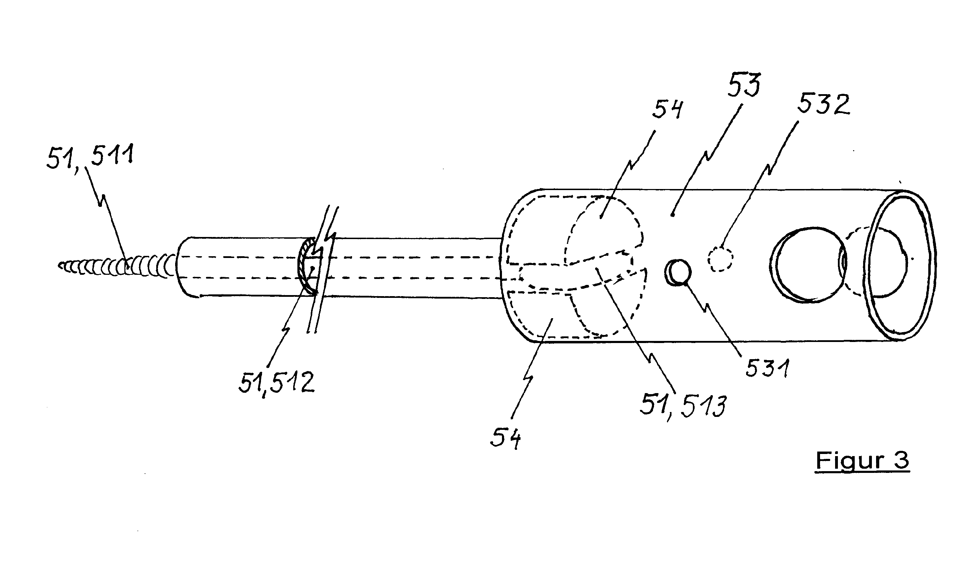

In Figur 3 sind als Schrägbild einzelne Bestandteile des Gerüstankers 5 gezeigt. Ganz rechts ist das Koppelprofil 53 mit dem größten Durchmesser zu sehen. Es hat an seinem rechten Ende zwei große Bohrungen zur Verbindung mit dem - in Figur 3 nicht gezeichneten - Verlängerungsprofil 55. Etwa in der Mitte des Koppelprofils sind die kleineren Bohrungen 531 und 532 zu sehen, die einen - in Figur 3 ebenfalls nicht gezeichneten - Sicherungsstift 56 aufnehmen. Dieser Stift 56 dient zur Blockierung der - in Figur 3 gestrichelt eingezeichneten - Öse 513 am wandfernen Ende des Ankerstiftes 51.

In Figur 3 ist sehr schön zu sehen, wie die beiden Zylindersegmente 54 sich mit ihrem Zylindermantel an die Innenfläche des Koppelprofils 53 anschmiegen und wie sich sie mit ihren nach innen weisenden Ebenen auf der Öse 513 abstützen, sodass die Öse 513 zwischen den beiden Zylindersegmenten 54 "eingeklemmt" ist.

Im weiteren Verlauf des Gerüstankers nach links hin ist der Ankerstift 51 gestrichelt gezeichnet. Von dessen zweitem Teil 512 ist nur im zeichnerisch ausgeschnittenen Teil des Hohlprofils 52 ein kurzes Stück zu sehen. Am linken Ende des Hohlprofils 52 beginnt der erste Teil 511 des Ankerstiftes 51, der hier als Gewinde ausgebildet ist.

Auch in Figur 3 wird ebenso wie in Figur 1 deutlich, dass der Ankerstift 51 in dem hier gezeigten Beispiel eine Ringschraube ist, deren Gewinde in den Figuren 3 und 1 links zu sehen ist und deren Öse 513 rechts erkennbar ist.

### Bezugszeichenliste

- 1: Vertikalständer, Teil des Gerüstrahmens vom Gerüst
- 2: Riegel, Teil des Gerüstrahmens vom Gerüst
- 3: Außenwand mit davor stehendem Gerüst
- 31: Bohrloch in Außenwand 3
- 4: Gerüstboden des Gerüstes
- 5: Gerüstanker zur Befestigung des Gerüstes an Außenwand 3
- 51: Ankerstift im Gerüstanker
- 511: erster Teil des Ankerstiftes 51
- 512: zweiter Teil des Ankerstiftes 51
- 513: Öse, am wandfernen Ende des Ankerstiftes (51)
- 52: Hohlprofil, umgibt den zweiten Teil 512 des Ankerstiftes 51
- 53: Koppelprofil, anschließend an Hohlprofil 52
- 531: Erste radiale Bohrung im Koppelprofil
- 532: Zweite radiale Bohrung im Koppelprofil
- 54: Zylindersegmente im Inneren des Koppelprofils 53
- 55: Verlängerungsprofil zwischen Koppelprofil 54 und Gerüst
- 56: Sicherungsstift in Bohrungen 531,532
- 6: Wärmedämmschicht auf Außenwand 3
- 7: Dübel in Bohrloch 31 für ersten Teil 511 des Ankerstiftes 51

- G: Breite des Gerüstes
- Z: Zwischenraum zwischen Gerüst und Wärmedämmung 6

## Patentansprüche

1. Gerüst an einer Außenwand (3) eines Gebäudes mit Wärmedämmschicht (6), bestehend aus
- mehreren schlanken Vertikalständern(1),die jeweils paarweise mit horizontalen Riegeln (2) zu Stellrahmen starr verbunden sind, welche durch horizontale Gerüstböden (4) miteinander verbunden werden, und
- mehreren, länglichen Gerüstankern (5), die das Gerüst mit der Außenwand (3) verbinden,
**dadurch gekennzeichnet, dass**
- der Gerüstanker (5) an mindestens zwei, voneinander beabstandeten Punkten mit dem Gerüst verbunden ist und
- derjenige Teil des Querschnittes vom Gerüstanker (5), der von dem Drehmoment belastet wird, das horizontal und parallel zur Außenwand auf das Gerüst wirkende Kräfte verursachen, nahe zur Außenwand (3) kleiner ist als nahe zum Gerüst.

2. Gerüst nach Anspruch 1, **dadurch gekennzeichnet, dass** sich der Querschnitt des Gerüstankers über dessen Länge hinweg von der Außenwand (3) bis zum Gerüst hin stufenlos vergrößert.

3. Gerüst nach einem der vorhergehenden Ansprüche, **dadurch gekennzeichnet, dass** der Gerüstanker zwischen Außenwand (3) und Gerüst
- eine trapezförmige, horizontal ausgerichtete Platte oder
- ein Kegelstumpf oder
- ein Hohlprofil, dessen Wandstärke zum Gerüst hin zunimmt, ist.

4. Gerüst nach einem der vorhergehenden Ansprüche, **dadurch gekennzeichnet, dass** sich der Querschnitt des Gerüstankers über dessen Länge hinweg in Stufen vergrößert, wobei innerhalb der Wärmedämmschicht der Querschnitt nach außen hin konstant ist

5. Gerüst nach einem der vorhergehenden Ansprüche, **dadurch gekennzeichnet, dass** der Gerüstanker (5) aus einem Ankerstift (51) besteht, der
- mit einem ersten Teil (511) in die Außenwand (3) einzubringen ist und
- dessen zweiter Teil (512) größtenteils von einem länglichen Hohlprofil (52) umgeben ist, das
- über wenigstens ein Koppelprofil (53) mit dem Gerüst verbunden ist, das im Querschnitt größer als das Hohlprofil (52) ist.

6. Gerüst nach einem der vorhergehenden Ansprüche, **dadurch gekennzeichnet, dass** sich das Hohlprofil (52) innerhalb einer Wärmedämmschicht (6) auf der Außenwand befindet und das Koppelprofil (53) außerhalb der Wärmedämmschicht (6) angeordnet ist und den Zwischenraum (Z) zwischen Wärmedämmschicht (6) und der wandinneren Kante des Gerüstes überbrückt.

7. Gerüst nach einem der vorhergehenden Ansprüche, **dadurch gekennzeichnet, dass** der zweite Teil (512) des Ankerstiftes (51) runde Querschnitte aufweist und das Hohlprofil (52) und das Koppelprofil (53) jeweils aus Rohrabschnitten bestehen, die konzentrisch zum zweiten Teil des Ankerstiftes (51) angeordnet sind.

8. Gerüst nach Anspruch 7, **dadurch gekennzeichnet, dass** die Rohrabschnitte einen kreisförmigen Querschnitt aufweisen.

9. Gerüst nach einem der vorhergehenden Ansprüche, **dadurch gekennzeichnet, dass** der erste Teil (511) des Ankerstiftes (51) mit einem Gewinde versehen ist.

10. Gerüst nach Anspruch 9, **dadurch gekennzeichnet, dass** das Gewinde in einen Dübel (7) oder in einen Steinanker hinein gedreht werden kann, der in ein Bohrloch (31) in der Außenwand (3) eingesteckt ist.

11. Gerüst nach einem der vorhergehenden Ansprüche, **dadurch gekennzeichnet, dass** der erste Teil (511) des Ankerstiftes (51) als Spreizdübel ausgebildet ist

12. Gerüst nach einem der vorhergehenden Ansprüche, **dadurch gekennzeichnet, dass** an das wandferne Ende des Ankerstiftes (51) eine Öse (513) oder ein abgewinkelter Schenkel angeformt ist, welche(r) von einer dazu komplementären Ausnehmung im Hohlprofil (52) oder im Koppelprofil (53) aufnehmbar ist.

13. Gerüst nach den Ansprüchen 5 und 12, **dadurch gekennzeichnet, dass**
- der Innenradius des Koppelprofils (53) etwas größer als der Außenradius der Öse (513) oder die größte Länge des abgewinkelten Schenkels ist und
- im Inneren des Koppelprofils (53) an dessen wandseitigem Ende zwei gleiche Zylindersegmente (54) befestigt sind,
- deren Zylindermantel jeweils auf der Innenfläche des Koppelprofils (53) aufliegt und
- deren jeweilige Schnittebene nahe an und parallel zu der Öse (513) oder dem abgewinkelten Schenkel verläuft.

14. Gerüst nach Anspruch 13, **dadurch gekennzeichnet, dass** das Koppelprofil (53) mit den Zylindersegmenten (54) starr verbunden ist und die Zylindersegmente (54) mit dem Hohlprofil (52) starr verbunden sind, z.B. durch Verschweißungen.

15. Gerüst nach Anspruch 14, **dadurch gekennzeichnet, dass** das Koppelprofil (53) in unmittelbarer Nachbarschaft der Öse (513) oder des abgewinkelten Schenkels in radialer Richtung von zwei miteinander fluchtenden Bohrungen (531, 532) durchbrochen ist, durch welche ein Sicherungsstift (56) lösbar hindurch gesteckt ist.

16. Gerüst nach einem der vorhergehenden Ansprüche, **dadurch gekennzeichnet, dass** ein Verlängerungsprofil (55) in das wandferne Ende das Koppelprofils (52) hineingeschoben oder über das wandferne Ende herübergeschoben ist und durch einen radial ausgerichteten Verbindungsstift oder durch je ein Gewinde in beiden Rohrenden oder durch eine Rastkupplung oder durch eine Madenschraube oder durch ein anderes Befestigungsmittel damit verbunden ist.

17. Verfahren zum Montieren eines Gerüstankers nach den vorhergehenden Ansprüchen, **dadurch gekennzeichnet, dass**
- im ersten Schritt der Ankerstift (51) mit seiner Spitze in den Innenraum des Koppelprofils (53) und von da weiter in das Hohlprofil (52) hinein geschoben wird, bis seine Öse (513) oder sein abgewinkelter Schenkel an den Anschlag im Koppelprofil (53) anstößt und
- im zweiten Schritt ein Sicherungsstift (56) durch die beiden miteinander fluchtenden Bohrungen (531,532) im Koppelprofil (53) eingesteckt und befestigt wird.

18. Verfahren nach Anspruch 17, **dadurch gekennzeichnet, dass**
- im dritten Schritt der soweit vorbereitete Teil des Gerüstankers (5) in der Außenwand (3) befestigt und
- im vierten Schritt die Verbindung zum Gerüst hergestellt wird.

19. Verfahren nach Anspruch 18, **dadurch gekennzeichnet, dass** im vierten Schritt zum Befestigen ein Werkzeug verwendet wird, dass auf die Befestigung des Verlängerungsprofils (55) am Koppelprofil (53) abgestimmt ist.

20. Verfahren nach Anspruch 19, **dadurch gekennzeichnet, dass** als Befestigung des Verlängerungsprofils (55) zwei radial ausgerichtete und miteinander fluchtende Bohrungen vorgesehen sind und durch diese Bohrungen als Werkzeug ein Hebel gesteckt wird.

21. Verfahren nach Anspruch 17, **dadurch gekennzeichnet, dass**
- im dritten Schritt das Koppelprofil (53) mit einem Verlängerungsprofil (55) verbunden wird und
- im vierten Schritt die Verbindung zum Gerüst hergestellt wird.
